Europäisches Patentamt

(19) European Patent Office

Office européen des brevets

(11) Publication number: **0 150 163**
A2

# (12) EUROPEAN PATENT APPLICATION

(21) Application number: **85850005.1**

(51) Int. Cl.⁴: **G 01 C 17/10**

(22) Date of filing: **07.01.85**

(30) Priority: **20.01.84 SE 8400284**

(43) Date of publication of application:
**31.07.85 Bulletin 85/31**

(84) Designated Contracting States:
**CH DE FR GB LI**

(71) Applicant: **Söderberg, Jan**
**Falkstigen 3**
**S-181 40 Lidingö(SE)**

(72) Inventor: **Gösta, Johansson Nils**
**Linnégatan 15**
**S-451 52 Uddevalla(SE)**

(74) Representative: **Winblad, Hans Peter et al,**
**H. ALBIHNS PATENTBYRA AB Box 7664**
**S-103 94 Stockholm(SE)**

(54) **Orienteering Compass.**

(57) The invention relates to an orienteering compass comprising a compass housing (14) which is rotatably mounted on or in a transparent base plate (10) and which encloses a rotatably journalled compass needle (16). The compass according to the invention is mainly characterised in that the base plate (10) has parallel north-south line markings (11,12) and in that the compass housing (14) is provided with a course-arrow marking (24) and that the base plate (10) is provided with a north and/or south marking (30,32) adjacent the compass housing (14).

EP 0 150 163 A2

0150163

Orienteering Compass

The present invention relates to an orienteering compass of the kind comprising a compass housing which is mounted for rotation on or in a transparent base plate and which encloses a rotatably journalled compass needle having parts thereof marked north and south.

In one well known compass of this kind (c.f. for example compasses retailed under the registered trademark "SILVA") the base plate has an elongated rectangular shape. Mounted in the proximity of one end of the base plate is a compass housing, while the opposite end of the base plate normally has a so-called course arrow marked thereon. The compass housing is provided with parallel lines, shown for example on the undersurface of the housing, which are intended to be brought into alignment with the meridian lines, i.e. the north-south lines on the map used (step 2), assisted by a north-marking on the compass housing, subsequent to having set the position of the compass relative to the map (step 1) when selecting a course. The position of the compass relative to the map is set by placing one side edge of the base plate, or an auxiliary line running parallel with said one edge, in line with the desired course direction, i.e. along a line connecting one point on the map with another, it being ensured when so doing that the course arrow points in the right direction, namely towards the goal to be reached. In order to then obtain the correct course reading with the aid of the course arrow, the compass is turned (by turning the body) with the compass held horizontal, until the north-end of the compass needle points towards/north/on the compass housing (step 3). The course arrow then indicates the correct course to follow.

In order for such compasses to give a satisfactory result, it is necessary to carry out the aforesaid steps correctly when setting a course.

When using the known compass, however, it is possible to make an error in step 2, in which the north-south lines beneath the compass housing are aligned with the meridian lines on the map. As will readily be understood, it is possible in this respect to set the north arrow in the south position beneath the compass housing, therewith setting a so-called contra-course (an error of 180°). Furthermore, the design of the base plate of the known compass is such that anyone unfamiliar with the compass may find themselves unsure when carrying out step 1, and make errors in conjunction therewith, for example, by placing the course arrow, located on the base plate, on the map in a direction directly opposite to the course intended.

A general object of the present invention is to provide a novel compass with which a course can be set more rapidly, more positively and in a more readily understandable manner than is possible with the aforedescribed known method.

A further object of the invention is to provide in addition a compass which is more compact than the aforedescribed known compass.

Another object of the invention is to provide a compass in which the appearance of the base plate resembles, as far as possible, the appearance of the map used, with respect, inter alia, to map design and markings, such as meridians, reference grids, text positioning, colour-plan, etc.

To this end the compass according to the invention is characterised in that the base plate has provided thereon parallel line markings, preferably north-south line markings, intended to be placed parallel with corresponding lines, preferably north-south lines, located on a reference grid on a map; in that the compass housing is provided with a course-arrow marking which subsequent to aligning the aforesaid line markings with corresponding lines on the map, is intended to be aligned with a course line, connecting one point on the map with another; and in that the base plate is provided with a north and/or a south marking adjacent to the compass housing, wherewith the north and south parts of the compass needle are intended to be brought into alignment with said north and/or south markings respectively, by turning the body so as to rotate the compass, such that the course-arrow marking on the compass housing shows the correct course to travel. Because the line markings corresponding to the meridians, edge markings or reference grid on the map are now placed on the
base plate, the compass can be given an appearance which resembles
that of the map more closely, thereby enabling the first step of
setting the compass to be carried out more easily, the setting being
made with a compass designed in accordance with the invention by
simple alignment of the base plate with the meridians or reference
grid on the map. Because the course arrow of the compass according
to the invention is now located in the compass housing itself, the
base plate, and therewith the compass as a whole, can be made more
compact than was previously the case. According to one suitable
embodiment of a compass according to the invention, the base plate
consequently has a substantially square shape and the corners of
the plate may be chamfered or rounded so as to provide a more comfortable
grip to the hand. This also enables the second step of setting a compass
course to be carried out more easily, in which step the compass housing
is rotated by a simple movement until the clearly visible course
arrow thereon is in alignment with a straight line drawn between
two points on the map or with an imaginery line connecting said two
points, naturally with the arrow pointing in the intended direction
of travel between the said two points.

According to a further embodiment of the invention, the base plate
of the compass may be round.

In order to enable the compass to be used even more easily, the line
markings on the base plate (the north-south lines and optionally
east-west lines extending at right angles thereto) the course-arrow
marking on the compass housing and the north and/or south marking(s)
on the plate can be made in mutually different colours wherewith
the line markings are preferably drawn in the same colours as the meridian
lines and east-west lines on the map reference grid, preferably in
black, while the course arrow is preferably marked in the same colour
as the course line or spot markings located on the map, preferably
in red or violet. The north marking on the base plate is suitably
made in the same colour as the north part of the compass needle,
for example green, while the south marking on the plate has the same colour as the south part of the needle, for example white.

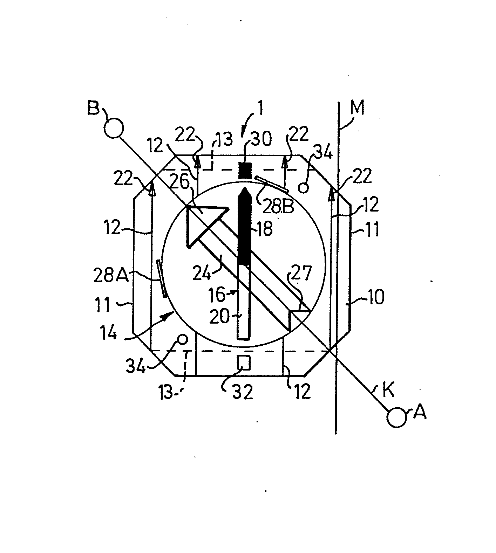

The invention will now be described in more detail with reference to the accompanying drawing, the single figure of which illustrates schematically and in plan view an embodiment of an orienteering compass designed in accordance with the invention.

In the figure, the reference 1 identifies generally a compass according to the invention, comprising a preferably square, transparent base plate 10, the corners of which may be chamfered in the shown manner, or rounded in order to provide a comfortable grip in the hand. Located on the sides and/or on a north part or a south part of the plate 10 and/or beneath a rotatably journalled compass housing 14 having journalled centrally therein a swingable magnetic compass needle 16 which presents a north part 18 and a south part 20, are north-south lines 12 which when the compass is placed on a map in a first course-setting step are intended to be placed parallel with meridian lines or with corresponding north-south lines in a reference grid on the map. This alignment of the compass on the map can be effected with the aid of the side edges 11 of the base plate 10, these side edges extending parallel with the north-south lines 12. The north-south lines 12 have arrow markings 22 which point north and which are preferably coloured black. The base plate 10 may also be marked with east-west lines, as illustrated by the broken lines 13 in the figure, for alignment with east-west lines on the map, the east-west lines on the base plate also preferably being coloured black.

The compass housing 14 may be pivotally journalled in a known manner, either on the upper surface of the base plate 10 or in a hole located therein. A clearly discernible course arrow 24, which is preferably coloured red or violet, is marked on the top or bottom surface of the compass housing 14. In this regard, the head 26 of the course arrow 24 may lie inwardly of the peripheral wall of the compass housing, as illustrated in the drawing, or may have the form of an outwardly projecting part connected to the peripheral wall of the housing. Correspondly, the foot 27 of the course arrow 24 may also have the form of an outwardly projecting part. In the second step of setting a course with the aid of a compass according to the invention, the compass housing 14 is turned so that the arrow 24 is aligned with the course line K extending from a point A on the map to a point B thereon, the arrow 24, of course, pointing in the direction of travel between the two points. According to one conceivable embodiment of the invention, not shown on the drawing, the course arrow may be provided with an extension capable of being connected to the arrow or moved along the length thereof, in order to facilitate alignment of the arrow with an imaginery course line connecting two points on the map, but not drawn thereon, when the distance between said two points is considerably greater than the length of the course arrow marked on the compass housing. This enables the second course-setting step to be carried out more easily.

In accordance with the invention, there is also provided on the bottom plate 10 adjacent to the compass housing 14 a north marking 30 and a south marking 32. The north marking 30 has the same colour, for example green, as the north part 18 of the compass needle 16, while the south marking 32 has the same colour, for example white, as the south part 20 of the needle. This facilitates the third and last step in setting a course with the aid of the compass according to the invention, this step being carried out by turning the compass 1 while holding the compass horizontally (by turning the body) until the north and south parts 18 and 20 of the compass needle 16 point in the direction of the corresponding north and south markings 30 and 32 on the plate.

As an alternative to holding the compass in the palm of the hand, the compass housing 14 may be provided with suitable holders 28A, 28B, to enable the compass housing to be selectively attached to the left or right thumb. The holders 28A, 28B may form an attachment for a thumb strap, not shown.

The base plate 10 may be provided with suitable friction-enhancing means 34, made of rubber or some other suitable material, so that the compass can be held more firmly against the map. The base plate 10 may be provided with measurement scales in a known manner.

In accordance with one suitable embodiment, the foot 27 of the course arrow 24 is provided with means for attaching twine or the like thereto.

In accordance with a further embodiment of the compass according to the invention, one or more graduated scales, (not shown) may be permanently or detachably marked on the bottom base plate 10, immediately externally of and/or internally of the periphery of the compass housing 14. In this regard, the scale is graduated in an anti-clockwise direction. Alternatively, or together therewith, one or more graduated scales (not shown) may be permanently or detachably marked on or beneath the compass housing 14, immediately outwardly of and/or inwardly of the periphery thereof. In this case, however, the scales are graduated in a clockwise direction.

Although in the first step of setting a course with the aid of the compass according to the invention the north-south lines on the bottom plate are primarily aligned with correspondingly oriented lines on the map, it will be understood that it lies within the scope of the invention to align the compass in an analogous and equivalent manner primarily by aligning east-west lines on the base plate with corresponding east-west lines on the map. This enables the compass according to the invention to be used with maps on which no north-south lines are marked. It will also be understood that both north-south line markings and east-west line markings can be used together, when fixing the position of the base plate in relation to the map.

## Claims

1. An orienteering compass comprising a compass housing (14) which is journalled for rotation on or in a transparent base plate (10) and which encloses a rotatably journalled compass needle (16) having marked north and south parts (18,20) c h a r a c t e r i s e d in that the base plate (10) has parallel line markings, preferably north-south line markings (11,12) intended to be placed parallel with corresponding lines on a map, preferably meridian lines (M) or other north-south lines on said map; in that the compass housing (14) is provided with a course arrow marking (24) which subsequent to aligning the line markings (11,12) with corresponding lines (M) on the map is intended to be aligned with a course line (K) connecting a point (A) on the map with another point (B) thereon; and in that the base plate (10) is provided with a north and/or a south marking (30,32) adjacent to the compass housing, (14), the north and south parts (18,20) of the compass needle being adapted to be aligned with said north and/or south markings by rotating the compass whereby the course arrow marking (24) on the compass housing shows the correct course direction.

2. A compass according to claim 1, c h a r a c t e r i s e d in that the base plate (10) has a substantially square shape.

3. A compass according to claim 2, c h a r a c t e r i s e d in that the corners of the base plate (10) are chamfered or rounded.

4. A compass according to claim 1, c h a r a c t e r i s e d in that the base plate has a round shape.

5. A compass according to any one of claims 1 - 4, c h a r a c t e r i s e d in that the line markings (12), the course-arrow marking (24) and the north and south markings (30,32)on the base plate (10) are marked in mutually different colours.

6. A compass according to any one of claims 1 - 5, c h a r a c t e r i s e d in that the north marking (30) on the base plate (10) is marked in the same colour as the north part (18) of the compass needle (16), for example green.

7. A compass according to any one of claims 1 - 6, c h a r a c t e r i s e d in that the south marking (32) on the base plate is marked in the same colour as the south part (20) of the compass needle, for example white.

8. A compass according to any one of claims 1 - 7, c h a r a c t e r i s e d in that the course-arrow marking (24) is marked in the same colour as course lines (K) or terrain locations (A,B) drawn or marked on the map, for example red or violet.

9. A compass according to any one of claims 1 - 8, c h a r a c t e r i s e d in that the north-south line markings (12) which exhibit north-marking arrows (22) are preferably coloured black.

10. A compass according to any one of claims 1 - 9, c h a r a c t e r i s e d in that the base plate (10) is provided with east-west line markings (13) intended to be aligned with east-west lines on the map, and in that similar to the north-south line markings (12) said east-west line markings are preferably coloured black.

11. A compass according to any one of claims 1 - 10, c h a r a c t e r i s e d in that the course arrow (24) can be extended.

12. A compass according to any one of claims 1 - 11, c h a r a c t e r i s e d in that one or more graduated scales are permanently or detachably marked on the base plate (10) immediately outwardly of and/or inwardly of the periphery of the compass housing (14), in which case said scales are graduated clockwise and/or permanently or detachably marked on the periphery of the compass housing (14) in which case said scales are graduated anti -clockwise.